(19) **Europäisches Patentamt**
**European Patent Office**
**Office européen des brevets**

(11) **EP 4 510 407 A1**

(12) **EUROPEAN PATENT APPLICATION**

(43) Date of publication:
**19.02.2025 Bulletin 2025/08**

(51) International Patent Classification (IPC):
**H02J 3/16** $^{(2006.01)}$     **H02J 3/18** $^{(2006.01)}$
**H02J 3/38** $^{(2006.01)}$     **H02J 3/00** $^{(2006.01)}$
**H02J 13/00** $^{(2006.01)}$

(21) Application number: **24185089.0**

(22) Date of filing: **27.06.2024**

(52) Cooperative Patent Classification (CPC):
**H02J 3/16; H02J 3/18; H02J 3/381;**
**H02J 13/00002;** H02J 2203/10; H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 IN 202321054900**

(71) Applicant: **Tata Consultancy Services Limited**
**400021 Mumbai, Maharashtra (IN)**

(72) Inventors:
- **ROY CHOWDHURY, NILANJAN**
  **411057 Pune, Maharashtra (IN)**
- **RAO, ANUJ KUMAR**
  **411057 Pune, Maharashtra (IN)**
- **BICHPURIYA, YOGESH KUMAR**
  **411057 Pune, Maharashtra (IN)**
- **SARANGAN, VENKATESH**
  **600113 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHODS AND SYSTEMS FOR REAL-TIME VOLTAGE STABILIZATION OF ELECTRICAL DISTRIBUTION NETWORKS WITH NON-LINEAR POWER FLOWS**

(57) The disclosure relates generally to methods and systems for real-time voltage stabilization of electrical distribution networks with non-linear power flows. Existing real-time voltage control techniques are neither performance nor stability guarantees. The present disclosure proposes an online robust control algorithm, which operates without knowing an exact information of the line-parameters and resolves the voltage stability problem. In the proposed method a load data, a distributed energy resources (DER) data, and a network data of an electrical distribution network is obtained, to obtain a voltage profile at each time-step of the electrical distribution network. Next, line-parameters of the electrical distribution network are predicted using an on-line convex optimization technique and a Gauss-Seidel technique. Then, a stable control signal for each bus that stabilizes a voltage of the electrical distribution network is determined to utilize the stable voltage for the voltage stabilizing of the electrical distribution network in real-time.

Dataset
$$\mathfrak{G}_t = \{(v_i, v_{i+1}, u_i, q_i)\}_{i=1}^t$$

Estimate $D(\hat{x}_t)$

Estimate $D(\hat{r}_t)$

$(D(\hat{x}_t), D(\hat{r}_t))$

Determination of the control input $u(t)$

$u(t)$

Append $(v(t+1), v(t), u(t), q(t))$ to the dataset $\mathfrak{G}_t$

FIG. 7

**Description**

CROSS-REFERENCE TO RELATED APPLICATIONS AND PRIORITY

The present application claims priority to Indian application no. 202321054900, filed on August 16, 2023.

TECHNICAL FIELD

The disclosure herein generally relates to the field of a voltage stabilization, and more specifically to methods and systems for real-time voltage stabilization of electrical distribution networks with non-linear power flows.

BACKGROUND

Electrical distribution networks are used to serve electricity/power in a predefined bounded area such as a city. Voltage control techniques are generally used for the electrical distribution networks to limit voltages at all buses within a prescribed safe limit under all possible operating conditions. Restricting such voltages in the electrical distribution networks within such prescribed safe limits is imperative since deviations from such prescribed safe limits may damage electrical equipment and can cause power outages.

Traditional voltage controllers such as a tap-changing transformer, series and shunt capacitors are capable enough to deal with slow voltage variations. However, due to the increasing integration of renewable energy resources such as a solar power and a wind power in the electrical distribution networks, the traditional voltage controllers may not be able to control the voltage variations (swings). Therefore, in recent times, salient efforts have been put forth to develop real-time voltage control techniques to quickly react by regulating the voltage variations (by regulating active and reactive power set-points). These real-time voltage control techniques typically minimize the steady-state cost of the voltage violation and operate based on an exact knowledge of a grid topology and line-parameters. However, in practice, the exact knowledge is not always available due to frequent distribution grid reconfiguration, and time-varying system parameters resulting from facility aging, temperature, humidity change, etc.

Existing real-time voltage control techniques which solve the voltage stability problem considering unknown values of the line-parameters, can be categorized into two major classes. The first class of the real-time voltage control techniques consider the electrical distribution networks which operate based on nonlinear power flow equations. However, the major drawback of these techniques is that they have neither performance nor stability guarantees, and they solely rely on numerical analysis techniques. As a result, their applications for electrical systems may be found inappropriate. The second class of the real-time voltage control techniques although theoretically ensure the stability and the performance guarantee, typically adopt the electrical distribution networks with linear power flow equations. Whereas, in practice, the power flow equations in the electrical distribution networks are non-linear. Thus, in the electrical distribution networks, these real-time voltage control techniques cannot be implemented in a straightforward way.

SUMMARY

Embodiments of the present disclosure present technological improvements as solutions to one or more of the above-mentioned technical problems recognized by the inventors in conventional systems.

In an aspect, a processor-implemented method for real-time voltage stabilization of electrical distribution networks with non-linear power flows is provided. The method including the steps of: obtaining a load data, a distributed energy resources (DER) data, and a network data of an electrical distribution network whose voltage is to be controlled in a real-time, wherein the load data and the DER data are obtained at each time-step of a plurality of time-steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time-step comprises a load active power consumption and a load reactive power consumption at the one or more buses of the plurality of buses, the DER data at each time-step comprises a DER active power generation and a DER reactive power generation, and the network data comprises of a line resistance and a line reactance of each line of the plurality of lines; simulating the electrical distribution network based on the load data, the DER data, and the network data using a non-linear power flow model, to obtain a voltage profile at each time-step of the electrical distribution network, wherein the voltage profile at each time-step comprises a voltage magnitude data at the plurality of buses; predicting line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines; determining a stable control signal for each bus of the plurality of buses, that stabilizes a voltage of the electrical distribution network, at each time-step, based on the line-parameters, using a non-convex optimization technique; evaluating a stable voltage and a reactive power injection for each bus, at each time-step, using the stable control signal associated to each bus; stabilizing a voltage stabilizing of the electrical distribution network in real-time by utilizing the stable voltage evaluated for each bus at each time-step; and determining a finite error stability bound of the electrical distribution network, resulted from the stable voltage evaluated for the voltage stabilizing of the electrical distribution network.

In another aspect, a system for real-time voltage stabilization of electrical distribution networks with non-linear power flows is provided. The system includes: a memory storing instructions; one or more Input/Output (I/O) interfaces; and one or more hardware processors coupled to the memory via the one or more I/O interfaces, wherein the one or more hardware processors are configured by the instructions to: obtain a load data, a distributed energy resources (DER) data, and a network data of an electrical distribution network whose voltage is to be controlled in a real-time, wherein the load data and the DER data are obtained at each time-step of a plurality of time-steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time-step comprises a load active power consumption and a load reactive power consumption at the one or more buses of the plurality of buses, the DER data at each time-step comprises a DER active power generation and a DER reactive power generation, and the network data comprises of a line resistance and a line reactance of each line of the plurality of lines; simulate the electrical distribution network based on the load data, the DER data, and the network data using a non-linear power flow model, to obtain a voltage profile at each time-step of the electrical distribution network, wherein the voltage profile at each time-step comprises a voltage magnitude data at the plurality of buses; predict line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines; determine a stable control signal for each bus of the plurality of buses, that stabilizes a voltage of the electrical distribution network, for each time-step, based on the line-parameters, using a non-convex optimization technique; evaluate a stable voltage and a reactive power injection for each bus, at each time-step, using the stable control signal associated to each bus; stabilize a voltage stabilizing of the electrical distribution network in real-time by utilizing the stable voltage evaluated for each bus at each time-step; and determine a finite error stability bound of the electrical distribution network, resulted from the stable voltage evaluated for the voltage stabilizing of the electrical distribution network.

In yet another aspect, there are provided one or more non-transitory machine-readable information storage mediums comprising one or more instructions which when executed by one or more hardware processors cause:: obtaining a load data, a distributed energy resources (DER) data, and a network data of an electrical distribution network whose voltage is to be controlled in a real-time, wherein the load data and the DER data are obtained at each time-step of a plurality of time-steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time-step comprises a load active power consumption and a load reactive power consumption at the one or more buses of the plurality of buses, the DER data at each time-step comprises a DER active power generation and a DER reactive power generation, and the network data comprises of a line resistance and a line reactance of each line of the plurality of lines; simulating the electrical distribution network based on the load data, the DER data, and the network data using a non-linear power flow model, to obtain a voltage profile at each time-step of the electrical distribution network, wherein the voltage profile at each time-step comprises a voltage magnitude data at the plurality of buses; predicting line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines; determining a stable control signal for each bus of the plurality of buses, that stabilizes a voltage of the electrical distribution network, for each time-step, based on the line-parameters, using a non-convex optimization technique; evaluating a stable voltage and a reactive power injection for each bus, at each time-step, using the stable control signal associated to each bus; stabilizing a voltage stabilizing of the electrical distribution network in real-time by utilizing the stable voltage evaluated for each bus at each time-step; and determining a finite error stability bound of the electrical distribution network, resulted from the stable voltage evaluated for the voltage stabilizing of the electrical distribution network.

In an embodiment, simulating the electrical distribution network based on the load data, the DER data, and the network data, using the non-linear power flow model, to obtain the voltage profile at each time-step of the electrical distribution network, comprising: representing the electrical distribution network as a tree graph based on the plurality of buses and the plurality of lines, in a parent-child relationship using a simulation model; defining a set of non-linear power flow equations for each bus of the plurality of buses using the non-linear power flow model, wherein the set of non-linear power flow equations for each bus comprises (i) an active power injection at the corresponding bus, (ii) the reactive power injection at the corresponding bus, (iii) a voltage difference between the corresponding bus and each of one or more neighboring bus, and (iv) an overall voltage of the electrical distribution network; and calculating the voltage magnitude data at each bus of the plurality of buses, using the set of non-linear power flow equations, to obtain the voltage profile of the electrical distribution network at each time-step.

In an embodiment, predicting the line-parameters of the electrical distribution network, based on the voltage profile using the on-line convex optimization technique and the Gauss-Seidel technique, comprising: (a) obtaining an initial reactance diagonal matrix and an initial resistance diagonal matrix of the electrical distribution network, randomly, based reactance values at each line, and resistance values at each line respectively; (b) estimating an intermediate reactance diagonal matrix, by fixing the initial resistance diagonal matrix, based on the voltage profile at a first time-step using the on-line convex optimization technique; (c) estimating an intermediate resistance diagonal matrix, by fixing the initial reactance diagonal matrix, based on the voltage profile at the first time-step using the on-line convex optimization technique; (d) estimating a subsequent reactance diagonal matrix, by fixing the intermediate resistance diagonal matrix, based on the voltage profile at next time-step using the on-line convex optimization technique; (e) estimating a subsequent resistance diagonal matrix, by fixing the intermediate reactance diagonal matrix, based on the voltage profile at the next time-step using the on-line convex optimization technique; (f) repeating steps (d) through (e), by considering the subsequent reactance diagonal matrix as the intermediate reactance diagonal matrix and the subsequent resistance diagonal matrix as the intermediate resistance diagonal matrix, at each subsequent step using the Gauss-Seidel technique, until the plurality of time-steps is completed, to obtain a final reactance diagonal matrix and a final resistance diagonal matrix of the electrical distribution network; and determining (i) a line resistance of each line, using the final resistance diagonal matrix, and (ii) a line reactance of each line, using the final reactance diagonal matrix, to predict the line-parameters of the electrical distribution network.

In an embodiment, the on-line convex optimization technique employs a first objective function and a first constraint set while (i) estimating the intermediate reactance diagonal matrix, by fixing the initial resistance diagonal matrix and (ii) estimating the subsequent reactance diagonal matrix, by fixing the intermediate resistance diagonal matrix, wherein the first objective function is to minimize a difference between the intermediate reactance diagonal matrix and the initial reactance diagonal matrix obtained at two consecutive time-steps of the plurality of time-steps and wherein the first constraint set comprises: (i) the intermediate reactance diagonal matrix obtained at a current time-step belongs to a predefined reactance convex compact set, (ii) an exogenous noise at each bus of the electrical distribution network should be bounded within a first predefined bound value, and (iii) a voltage of the electrical distribution network obtained at the current time-step should belongs to a predefined voltage convex compact set.

In an embodiment, the on-line convex optimization technique employs a second objective function and a second constraint set while (i) estimating the intermediate resistance diagonal matrix, by fixing the initial reactance diagonal matrix and (ii) estimating the subsequent resistance diagonal matrix, by fixing the intermediate reactance diagonal matrix, wherein the second objective function is to minimize a difference between the intermediate resistance diagonal matrix and the initial resistance diagonal matrix obtained at two consecutive time-steps of the plurality of time-steps, and wherein the second constraint set comprises: (i) the intermediate resistance diagonal matrix obtained at a current time-step belongs to a predefined resistance convex compact set, (ii) an exogenous noise at each bus of the electrical distribution network should be bounded within a first predefined bound value, and (iii) a voltage of the electrical distribution network obtained at the current time-step should belongs to a predefined volage convex compact set.

In an embodiment, the one or more hardware processors (104) are configured to determine the stable control signal for each bus that stabilizes the voltage of the electrical distribution network, at each time-step, based on the line-parameters, by minimizing a non-convex objective function of the non-convex optimization technique and a third constraints set, wherein the non-convex objective function comprises a voltage violation cost, a control signal for each bus, and a slack variable, and wherein the third constraints set comprises: (i) the reactive power injection at each bus at the corresponding time-step should be bounded by a second predefined bound value and a third predefined bound value, (ii) a predicted voltage of the electrical distribution network based on the line-parameters should be equal to the voltage of the electrical distribution network without an external voltage disturbance, and (iii) the predicted voltage of the electrical distribution network should be bounded within a first predefined voltage bound value and a second predefined voltage bound value.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for real-time voltage stabilization of electrical distribution networks with non-linear power flows, in accordance with some embodiments of the present disclosure.

FIG. 2 is an exemplary block diagram illustrating modules of the system of FIG. 1 for real-time voltage stabilization of electrical distribution networks with non-linear power flows, in accordance with some embodiments of the present disclosure.

FIGS. 3A and 3B illustrate exemplary flow diagrams of a processor-implemented method for real-time voltage stabilization of electrical distribution networks with non-linear power flows, in accordance with some embodiments of the present disclosure.

FIG. 4 illustrates an exemplary electrical distribution network, according to some embodiments of the present disclosure.

FIG. 5 illustrates an exemplary flow diagram for simulating the electrical distribution network based on the load data, the DER data, and the network data, using the non-linear power flow model, to obtain the voltage profile at each time-step of the electrical distribution network, in accordance with some embodiments of the present disclosure.

FIG. 6 illustrates an exemplary flow diagram for predicting the line-parameters of the electrical distribution network, based on the voltage profile using the on-line convex optimization technique and the Gauss-Seidel technique, in accordance with some embodiments of the present disclosure.

FIG. 7 illustrates an exemplary flow diagram of a robust online voltage control algorithm for predicting the line-parameters and the stable control signals of the electrical distribution network, in accordance with some embodiments of the present disclosure.

FIG. 8 is a graph showing a comparison of an error vector magnitude of a baseline technique and the present disclosure.

FIG. 9 is a graph showing a comparison of a voltage profile of bus 13 of the exemplary electrical distribution network of FIG. 4, associated to the baseline technique and the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Given an electrical distribution network serving a city or a town, a prime objective of a voltage control technique is to maintain voltages at all buses within a safe limit under all possible operating conditions. It is imperative to restrict the voltages within this limit since deviations from such limits may damage electrical equipment and can cause power outages. Traditional voltage controllers such as a tap-changing transformer, series and shunt capacitors are capable enough to deal with slow voltage variations. However, due to the increasing integration of renewable energy resources in the electrical distribution networks, the traditional voltage controllers may not be able to control the voltage swings.

Therefore, in recent times, salient efforts have been put forth to develop real-time voltage control algorithms to quickly react by regulating the active and reactive power set-points. These real-time voltage control algorithms typically minimize the steady-state cost of the voltage violation and operate based on the exact knowledge of a grid topology and line-parameters of the electrical distribution network. However, in practice, the exact knowledge is not always available due to frequent reconfiguration of the electrical distribution network, and time-varying parameters of the electrical distribution network resulting from facility aging, temperature, humidity change, etc.

Thus far, only a limited number of research works exist in which voltage control techniques/algorithms are developed considering unknown electrical distribution network topology. These works either exploit an identification-based control algorithm to predict the network topology or design model free voltage controllers leveraging tools from reinforcement learning. The former work adopts the voltage stability problem in the framework of convex optimization, and develops a neural network-based solution, which can be used for both distribution grid modeling and for solving the voltage stability problems. Some voltage control techniques formulate a standard volt-var and the optimal tap-setting problem as a Markov decision process, and design reinforcement learning algorithms to solve it. A virtual transition generator was proposed to estimate the voltage magnitudes under different tap settings, and develop a computationally efficient algorithm, which can determine the optimal tap positions directly. However, the major drawback of these results is that they have neither performance nor stability guarantees, and they heavily rely on numerical analysis. Thus, their applications for safety-critical applications may be inappropriate.

Voltage control algorithms over unknown grid topology with stability and performance guarantees have recently been proposed. These works typically formulate voltage control problems as a constraint optimization problem, where the objective is to minimize the voltage violation cost over a balanced distribution network, while the constraint set accommodates a linear power flow model and bounds on the reactive power. Solutions to these problems either rely on the standard data-driven techniques or consider online learning-based control algorithms. For instance, data-driven techniques may be employed to estimate grid topology and the line-parameters exploiting the available grid data, and then based on these estimates, the optimal power injection is determined to the grid to solve the voltage instability problem. Further, a similar line of work developed a robust online voltage control update by amalgamating the ideas from a convex body chasing algorithm and robust predictive control. The body chasing algorithm predicts a set of topologies that are consistent with the observed voltage measurements, and based on these measurements, the robust predictive control is employed to establish the voltage stability. Further a competitive analysis of their control update is performed to determine its finite error stability bound. Likewise, some works leverage tools from Lyapunov stability theory and certify that the proposed control updates are asymptotically and exponentially stable if the learning policies are strictly monotonic and Lipschitz continuous.

The present disclosure solves the technical problems in the art for real-time voltage stabilization of the electrical distribution networks with non-linear power flows. The present disclosure proposes an online robust control algorithm, which operates without knowing an exact information of the line-parameters and resolves the voltage stability problem of a balanced electrical distribution network. Since the branch power flow equations are non-linear, the applicability of conventional works to most real-world scenarios are undermined. To address this gap, an online algorithm is developed first, which consider the nonlinear power flow model, and then analyze its performance by computing the finite error bound. In developing the proposed online algorithm, some significant challenges are encountered. A key challenge is that the presence of line losses in the non-linear power flow equations, which introduce a strong coupling between the unknown network impedance parameters. This adds to the complexity of closed-loop voltage dynamics. Therefore, none of the existing approaches to control voltages in unknown networks can be applied directly. This challenge is circumvented by (i) considering mild assumptions (which reasonably hold in real world) that reduce the degree of coupling between the unknown network parameters; (ii) making rigorous modifications to the existing convex body chasing approach by embracing results from a celebrated Gauss-Seidel technique. The present disclosure efficiently predicts the line-parameters, which are consistent with the voltage measurements, and certify that the number of times, when the voltage limits got violated, are bounded.

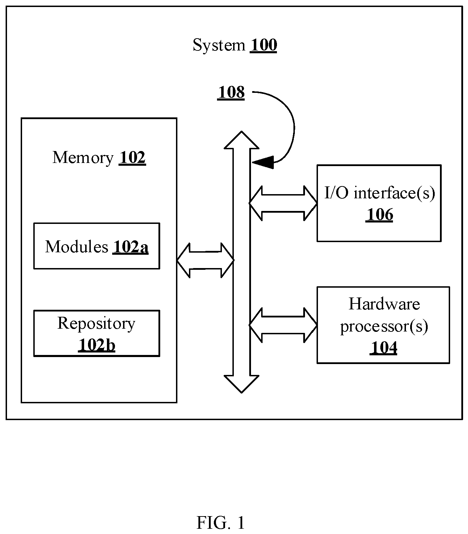

Referring now to the drawings, and more particularly to FIG. 1 through FIG. 9, where similar reference characters denote corresponding features consistently throughout the figures, there are shown preferred embodiments and these embodiments are described in the context of the following exemplary systems and/or methods.

FIG. 1 is an exemplary block diagram of a system 100 for real-time voltage stabilization of electrical distribution networks with non-linear power flows, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

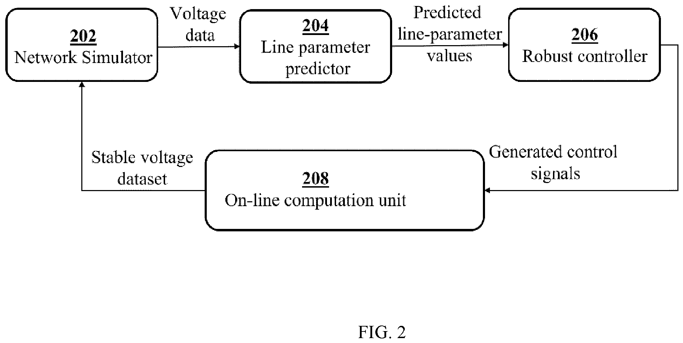

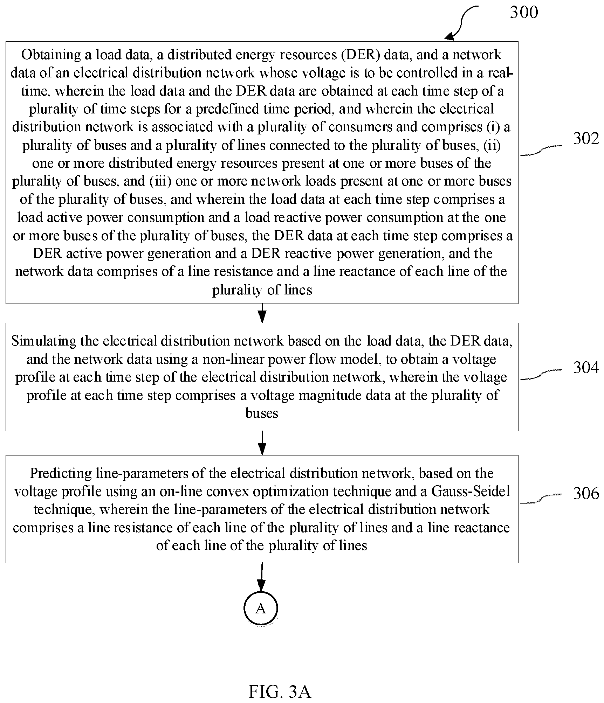

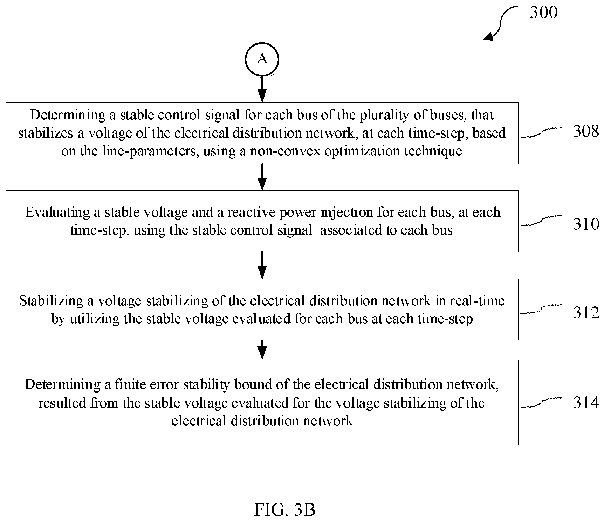

Referring collectively to FIG. 2 and FIGS. 3A and 3B, components and functionalities of the system 100 are described in accordance with an example embodiment of the present disclosure. For example, FIG. 2 is an exemplary block diagram illustrating modules 200 of the system 100 of FIG. 1 for real-time voltage stabilization of electrical distribution networks with non-linear power flows, in accordance with some embodiments of the present disclosure. As shown in FIG. 2, the modules 200 include a network simulator 202, a line parameter predictor 204, a robust controller 206, and an on-line computation unit 208. In an embodiment, the modules 200 are stored in the plurality of modules 102a of the system 100.

FIGS. 3A and 3B illustrate exemplary flow diagrams of a processor-implemented method 300 for real-time voltage stabilization of electrical distribution networks with non-linear power flows, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to obtain a load data, a distributed energy resources (DER) data, and a network data of an electrical distribution network whose voltage is to be controlled in the real-time. The electrical distribution network is associated with a plurality of consumers those consume power from the electrical distribution network.

In an embodiment, the electrical distribution network includes a plurality of buses and a plurality of lines connected to the plurality of buses. The electrical distribution network also includes one or more distributed energy resources present at one or more buses of the plurality of buses. More specifically, some consumers of the plurality of consumers (at the one or more buses) have these one or more distributed energy resources. The one or more distributed energy resources are non-renewable energy storage devices and other type of energy storage devices. In an embodiment, the one or more distributed energy resources includes but are not limited to roof top solar photovoltaic units, wind power generating units, and battery storage units. Further, the electrical distribution network includes one or more network loads present at one or more buses of the plurality of buses.

In an embodiment, the load data and the DER data are obtained at each time-step of a plurality of time-steps for a predefined time period. More specifically, both the load data and the DER data are obtained at a specific time interval defined in the form of the time-step for the predefined time period. In an embodiment, an exemplary time interval is 5 seconds, and an exemplary predefined time period is 24 hours, i.e., the load data and the DER data is obtained at each 5 seconds interval for the duration of 24 hours.

In an embodiment, the load data at each time-step includes a load active power consumption and a load reactive power consumption, at the one or more buses of the plurality of buses. In an embodiment, the DER data at each time-step includes a DER active power generation and a DER reactive power generation, of each of the one or more distributed energy resources present at the one or more buses. In an embodiment, the network data comprises of a line resistance and a line reactance of each line of the plurality of lines connected to the plurality of buses.

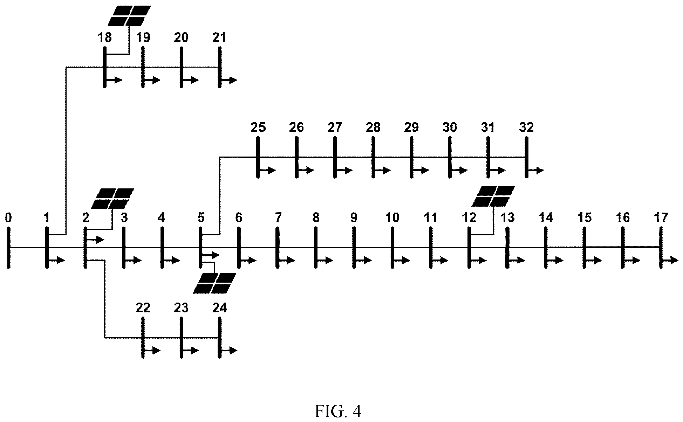

In an embodiment, the electrical distribution network is a radial distribution grid and is typically represented by a rooted directed tree and further, the electrical distribution network is considered as a balanced tree. FIG. 4 illustrates an exemplary electrical distribution network, according to some embodiments of the present disclosure. As shown in FIG.4, the exemplary electrical distribution network comprises 33 buses (0 to 32) and 32 lines each connecting 2 buses. Further, the exemplary electrical distribution network comprises 4 distributed energy resources of type solar photovoltaic unit, each present at bus 2, the bus 5, the bus 12, and the bus 18.

At step 304 of the method 300, the one or more hardware processors 104 of the system 100 are configured to simulate the electrical distribution network based on the load data, the DER data, and the network data obtained at the step 302 of the method 300 to obtain a voltage profile of the electrical distribution network. The voltage profile of the electrical distribution network is obtained at each time-step based on the corresponding load data, the DER data, and the network data at that time-step. The voltage profile at each time-step comprises a voltage magnitude data at the plurality of buses of the electrical distribution network.

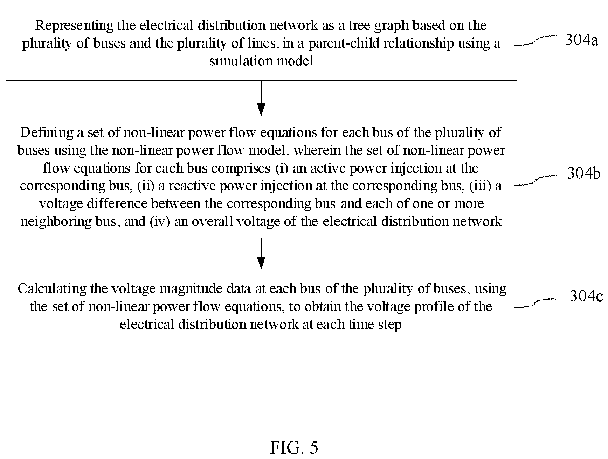

A non-linear power flow model is employed to simulate the electrical distribution network and obtain the voltage profile of the electrical distribution network. FIG. 5 illustrates an exemplary flow diagram for simulating the electrical distribution network based on the load data, the DER data, and the network data, using the non-linear power flow model, to obtain the voltage profile at each time-step of the electrical distribution network, in accordance with some embodiments of the present disclosure. As shown in FIG. 5, simulating the electrical distribution network based on the load data, the DER data, and the network data, using the non-linear power flow model, to obtain the voltage profile, is further explained through steps 304a to 304c.

At step 304a, the electrical distribution network is represented as a tree graph based on the plurality of buses and the plurality of lines, in a parent-child relationship using a simulation model. In an embodiment, the simulation model may employ simulation techniques such as MATLAB or using a python code.

At step 304b, a set of non-linear power flow equations for each bus of the plurality of buses are defined using the non-linear power flow model. The set of non-linear power flow equations for each bus comprises (i) an active power injection at the corresponding bus, (ii) a reactive power injection at the corresponding bus, (iii) a voltage difference between the corresponding bus and each of one or more neighboring bus, and (iv) an overall voltage of the electrical distribution network.

The active power injection at some bus is calculated by subtracting the resistive line losses and the sum of the active power flows into its child busses (of the corresponding bus) from the active power flow from its parent bus (root bus) and is mathematically represented as:

$$Active\ power\ injecton\ at\ bus\ j$$
$$= active\ power\ flow\ from\ its\ parent\ bus$$
$$- resistive\ line\ losses$$
$$- sum\ of\ active\ power\ flows\ to\ its\ child\ busses$$

The reactive power injection at some bus is calculated by subtracting the reactive line losses and the sum of the reactive power flows into its child busses (of the corresponding bus) from the reactive power flow from its parent bus (root bus) and is mathematically represented as:

$$Reactive\ power\ injecton\ at\ bus\ j$$
$$= Reactive\ power\ flow\ from\ its\ parent\ bus$$
$$- reactive\ line\ losses$$
$$- sum\ of\ reactive\ power\ flows\ to\ its\ child\ busses$$

The voltage difference between the corresponding bus and a neighboring bus is mathematically represented as:

$$Voltage\ difference\ between\ bus\ j\ and\ bus\ i$$
$$= 2(reactance\ of\ line\ ij$$
$$* reactance\ power\ flow\ in\ line\ ij + resistance\ of\ line\ ij$$
$$* active\ power\ flow\ in\ line\ ij)$$
$$- squared\ of\ active\ and\ reactive\ line\ losses$$

In the above equations, non-linearity appears due to the active and reactive line losses. The obtained non-linear voltage model follows a subsequent relation to calculate the overall bus voltage at time t:

$$Overall\ bus\ voltages\ at\ time\ t$$
$$= overall\ bus\ voltages\ at\ time\ (t-1) + non$$
$$- linear\ coupling\ term\ depends\ on\ a\ line\ resistance\ and\ a\ line\ reactance$$
$$* a\ change\ in\ reactive\ power\ from\ time\ (t-1)\ to\ time\ t$$
$$+ uncontrollable\ noise$$

At step 304c, the voltage magnitude data (voltage data) at each bus of the plurality of buses, is calculated using the set of non-linear power flow equations as defined in the above step 304b, to obtain the voltage profile of the electrical distribution network at each time-step.

Consider a radial electrical distributed network (distributed grid) represented by the rooted directed tree $\mathcal{G}$ = (V, $\varepsilon$), wherein V denotes a bus set comprising {0,1, ..., n} (where, = c(V) = n + 1) denotes the set of buses, and wherein the 0th bus is called as a substation bus, i.e., a root of the tree $\mathcal{G}$, while the other buses are the branch buses. Without a loss of generality, the substation bus is considered as known and fixed, and each branch bus typically hosts a load and a distributed energy resource. Similarly, $\varepsilon$ denotes a line set comprising {1,2, ..., l} (where, = c($\varepsilon$) = l = n) denotes the set of lines (typically called as distribution feeder lines), where each line l = (i, j) $\in$ V $\times$ V is associated with an ordered pair of busses i, j $\in$ V. The topology of such a radial electrical distributed network can be uniquely captured by a line-to-bus incidence matrix $\mathrm{M} = [m, M] \in \mathbb{R}^{l \times (n+1)}$, and its each element denotes as $m_{ij}$, is computed based on the subsequent relation:

$$m_{ij} = \begin{cases} 1, & if\ the\ line\ l \in \mathcal{E}\ leaves\ the\ node\ i \in \mathcal{V} \\ -1, & if\ the\ line\ l \in \mathcal{E}\ enters\ the\ node\ i \in \mathcal{V} = \\ 0, & otherwise \end{cases}$$

Here $M \in \mathbb{R}^{l \times n}$ is the reduced incidence matrix of $\mathcal{G}$, which is obtained by removing the first column of M, i.e., $m \in \mathbb{R}^{l}$. The reduced incidence matrix M is found as a non-singular, lower triangular matrix and it has $\lambda_i(M)$ = -1 for all $i \in$ {1,2, ..., n}.

Table 1 shows key electrical symbols/variables (quantities) along with their description used in the present disclosure.

Table 1

| Variable | Description |
|---|---|
| $z_{ij} = r_{ij} + j\,x_{ij}$ | Impedance of each transmission line $(i, j) \in \varepsilon$ |
| $S_{ij} = P_{ij} + j\,Q_{ij}$ | Power flow of each transmission line $(i, j) \in \varepsilon$ |
| $I_{ij}$ | Current of each transmission line $(i, j) \in \varepsilon$ |
| $c_{ij} = |I_{ij}|^2$ | Squared current magnitude |
| $V_i$ | Line-to-ground voltage magnitude at bus $i \in v$ |
| $v_i = |V_i|^2$ | Squared voltage magnitude |
| $V_0$ | Substation bus voltage |
| $v_0 = |V_0|^2$ | Squared voltage magnitude of the substation bus |
| $s_i = p_i + j\,q_i$ | Net power injection at each bus $i \in v$ |
| $\delta_{ij}$ | Voltage angle between bus $i$ and $j$ |

Below are the notations that are used in the present disclosure: The set of $n \times n$ symmetric and non-negative matrices are denoted by $\mathbb{S}_+^n$ and $\mathbb{R}_+^n$. The vector $1_d \in \mathbb{R}^d$ is a column vector, where all elements are equal to 1, while $I_d \in \mathbb{R}^{d \times d}$ (resp. $0_d \in \mathbb{R}^{d \times d}$) is an identity matrix (resp. null matrix), these subscripts will be omitted when there is no ambiguity. For a complex number $c = c_1 + j\,c_2$, where $j = \sqrt{-1}$, $|c|$ computes its absolute value. Given a matrix $A \in \mathbb{R}^{n \times n}$, $a_{ij}$ is the element on row $i$ and column $j$, while $\lambda_i(A)$ (resp. $\sigma(A)$) denotes the $i^{th}$ eigenvalue (resp. spectrum) of $A$. The Euclidean, infinity and the Frobenius norm of this matrix are defined as $\|A\|_2$, $\|A\|_\infty$ and $\|A\|_F$, respectively. Given a symmetric positive definite matrix $P \in \mathbb{R}^{n \times n}$, where $\|y\|_P^2 = y^T P y$, where $y \in \mathbb{R}^n$, while the inequality $P \geq 0_n$ holds element-wise. For a column vector $a := [a_1, a_2, ..., a_n] \in \mathbb{R}^n$, the diagonal matrix $D(a) \in \mathbb{R}^{n \times n}$ is computed as $D(a) = diag\,(a_1, a_2, ..., a_n)$. The cardinality and the diameter of an arbitrary set $S$ are described by $c(S)$ and $diam\,(S) = sup_{s_1, s_2 \in S}\,\|s_1 - s_2\|_F$.

As described, the electrical distributed network is considered as balanced in the present disclosure. Hence, the classic non-linear power flow equations can be written as:

$$-p_j = P_{ij} - r_{ij}c_{ij} - \sum_{k:(j,k)\in\mathcal{E}} P_{jk} \qquad \text{---------------- (1a)}$$

$$-q_j = Q_{ij} - x_{ij}c_{ij} - \sum_{k:(j,k)\in\mathcal{E}} Q_{jk} \qquad \text{---------------- (1b)}$$

$$v_j - v_i = 2\left(r_{ij}P_{ij} + x_{ij}Q_{ij}\right) - \left(r_{ij}^2 + x_{ij}^2\right) c_{ij} \qquad \text{---------------- (1c)}$$

Where $i = parent\,(j)$, the equations 1a, 1b and 1c (combinedly referred as equation 1 hereafter), are employed to obtain a closed-loop vector form of the voltage dynamics

$$v(t) := [v_1(t), v_2(t), ..., v_n(t)].$$

Further following assumptions are adopted in the present disclosure.

Assumption 1: The reactive power losses along the line are negligible, i.e., $x_{ij}c_{ij} \approx x_{ij}^2 c_{ij} \approx 0$.

Assumption 2: The voltage angle between two neighboring bused is very small, i.e., $\delta_{ij} \approx 0$.

Since the electrical distribution networks are typically characterized by a radial structure with high resistance to reactance feeders, the assumption 1 will hold true. Further, the assumption 2 is widely adopted in the power system literature.

Let us define $a = [a_1, a_2, ..., a_n]$, where $a_i \in \{p_i, q_i\}$ for all $i \in \{1, 2, ..., n\}$ and $b = [b_1, b_2, ..., b_l]$ where $b_i \in \{P_i, Q_i, r_i, x_i, c_i\}$ for all $i \in \{1, 2, ..., l\}$. Then, based on the approximate form of the non-linear power flow model (the equation 1) can be compactly written as equation 2 (2a, 2b and 2c together):

$$p(t) = M^T P(t) + D(r)\,c(t) \qquad \text{--------------- (2a)}$$

$$q(t) = M^T Q(t) \qquad \text{--------------- (2b)}$$

$$M(v(t) - v_0 1) = 2\,(D(r)P(t) + D(x)Q(t)) - D^2(r)c(t) \qquad \text{-------------- (2c)}$$

Considering the relations of $P(t)$ with $p(t)$ in equation 2a and $Q(t)$ with $q(t)$ in equation 2b, the equation can be simplified as in equation 3:

$$M(v(t) - v_0 1) = 2\left(D(r)\,(M^T)^{-1}p(t) + D(x)\,(M^T)^{-1}q(t)\right) - Cc(t) \text{ -- (3)}$$

Wherein $C := D(r)\,(M^T)^{-1}D(r) + D^2(r)$. Observe that the equation 3 is non-linear, and this non-linearity appears due to the quadratic current term $c(t) \in \mathbb{R}^n$. Each term of $c(t)$ is represented as:

$$c_{ij}(t) = \frac{|V_i|^2 + |V_j|^2 - 2V_i V_j \cos \delta_{ij}}{r_{ij}^2} \qquad \text{------------- (4)}$$

In the above equation 4, considering the assumption 2, $V_i V_j$ is approximated as the convex combination of $v_i$ and $v_j$ by setting the $\cos \delta_{ij} \approx 1$, i.e.,

$$V_i V_j \approx \theta_{ij} v_i(t) + (1 - \theta_{ij})v_j(t) \qquad \text{----------------------(5)}$$

Where $\theta_{ij} \in [0,1]$. Substituting equation 5 into the equation 4, $c_{ij}(t) \approx (1 - 2\theta_{ij})\frac{v_i - v_j}{r_{ij}^2}$, which can further be written in a vector form as $c(t) \approx (D^2(r))^{-1}(I - 2D(\theta))M(v(t) - v_0 1)$. Then substituting this approximated value of $c(t)$ into equation 3, and performing further algebraic manipulations, to obtain equation 6:

$$\mathcal{A}(\theta, r)M(v(t) - v_0 1) = 2(D(r)\,(M^T)^{-1}p(t) + (D(x)\,(M^T)^{-1}q(t)) \text{ --------- (6)}$$

Here the matrix function $(D(\theta), D(r)) \mapsto \mathcal{A}(\theta, r) \in \mathbb{R}^{n \times n}$ is defined as:

$$\mathcal{A}(\theta, r) = \left(I + \left(I + 2D(r)(M^T)^{-1}\,D(r)^{-1}\big(I - 2D(\theta)\big)\right)\right) \text{ ---------------------- (7)}$$

The equation 6 can be projected as a non-liner discrete-time system and it can be written as:

$$v(t + 1) = f(\theta, r, x)\,q(t) + v_{ex}(t) \qquad \text{----------------------(8)}$$

Where the function $(D(\theta), D(r), D(x)) \mapsto f(\theta, r, x)$ and $t \mapsto v_{ex}(t)$ are defined as

$$f(\theta, r, x) = 2M^{-1}\,\mathcal{A}^{-1}(\theta, r)\,D(x)(M^T)^{-1} \qquad \text{----------------------(9)}$$

$$v_{ex}(t) = v_0 1 + 2M^{-1}\,\mathcal{A}^{-1}(\theta, r)\,D(r)(M^T)^{-1}p(t) \qquad \text{--------------------(10)}$$

Thereafter, substituting $u(t) = q(t) - q(t-1)$ and $w(t) = v_{ex}(t) - v_{ex}(t-1)$, into equation 8, the subsequent closed-loop voltage dynamics are obtained as

$$v(t + 1) = v(t) + f(\theta, r, x)\,u(t) + w(t) \qquad \text{------------------------(11)}$$

Remark 1: Observe that in the equation 5, $\theta_{ij} = 0.5$ considered for all $i, j \in \{1,2, ... , n\}$, then $D(\theta)$ in equation 7 becomes $D(\theta) = \frac{1}{2}I$. Consequently, found that $\mathcal{A}(\theta, r) = I$, and the non-linear voltage dynamics (equation 6) boils to its linear counterpart.

Remark 2: Although M is a lower triangular matrix and $D(r)$, $D(x) \in \mathbb{R}^{n \times n}$ are diagonal matrices, the matrix function $f(\theta, r, x)$ in equation 9 is generally full. Hence, following equation 11, it is observed that although the reactive power is injected locally, this injection affects the entire voltage of the given electrical distribution network.

Given the electrical distribution network, the main objective is to design an on-line robust control algorithm for the voltage dynamics (equation 11), which can regulate $v(t) \in \mathbb{R}^n$ from an arbitrary initial voltage $v(1) \in \mathbb{R}^n$ into the safe limits $[v_{min}, v_{max}] \subset \mathbb{R}^n$, without knowing the exact information of $D(r)$ and $D(x)$. Further, the other aim to compute finite-error bound of the on-line robust control algorithm. Note that, the relation between the tuple $D(r)$, $D(x)$ and $v(t)$ is captured by the function $f(\theta, r, x)$ in equation 11 and it is defined in equation 7 and 9. It is possible that $v(1) \notin [v_{min}, v_{max}]$ due to some large initial disturbance. However, for all $t \geq 2$, the on-line robust control algorithm aims to maintain $v(t) \in [v_{min}, v_{max}]$, i.e., keeps $v(t) \to v_{nom}$, where $v_{nom} = \dfrac{(v_{min} + v_{max})}{2}$. $v(t) \in \mathbb{R}^n$ is selected in equation 11, as the control variable, which is the change of reactive power injected at all the buses, i.e., $\underline{u}(t) = q(t) - q(t-1)$, where the $q(t)$ is considered as bounded, i.e., $q(t) \in [q_{min}, q_{max}] \subset \mathbb{R}^n$ for all $t \geq 0$. Thus, it follows $u(t)$ is also bounded.

At step 306 of the method 300, the one or more hardware processors 104 of the system 100 are configured to predict line-parameters of the electrical distribution network, based on the voltage profile obtained at step 304. The line-parameters of the electrical distribution network comprises a line resistance of each line of the plurality of lines and a line reactance of each line of the plurality of lines. An on-line convex optimization technique and a Gauss-Seidel technique are employed to predict the line-parameters of the electrical distribution network.

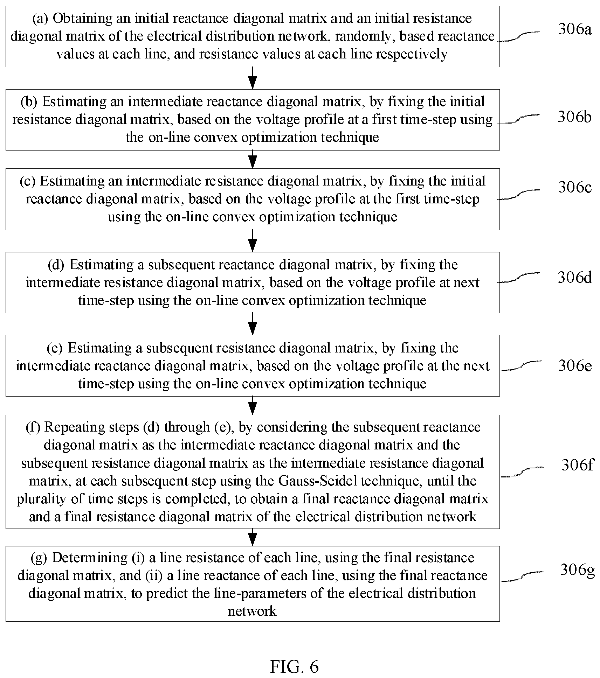

FIG. 6 illustrates an exemplary flow diagram for predicting the line-parameters of the electrical distribution network, based on the voltage profile using the on-line convex optimization technique and the Gauss-Seidel technique, in accordance with some embodiments of the present disclosure. As shown in FIG. 6, predicting the line-parameters of the electrical distribution network, based on the voltage profile using the on-line convex optimization technique and the Gauss-Seidel technique, is further explained through steps 306a to 306g. At step 306a, an initial reactance diagonal matrix and an initial resistance diagonal matrix of the electrical distribution network, are initialized/obtained randomly, based reactance values at each line, and resistance values at each line respectively. The initial reactance diagonal matrix comprises initial line reactance values for each line, present as diagonal elements. The initial resistance diagonal matrix comprises initial line resistance values for each line, present as diagonal elements.

At step 306b, an intermediate reactance diagonal matrix is estimated by fixing the initial resistance diagonal matrix, based on the voltage profile at a first time-step using the on-line convex optimization technique. The first time-step is the initial time-step $t(0)$. The intermediate reactance diagonal matrix comprises intermediate line reactance values for each line, present as diagonal elements.

At step 306c, an intermediate resistance diagonal matrix is estimated by fixing the initial reactance diagonal matrix, based on the voltage profile at the first time-step using the on-line convex optimization technique. The first time-step is the initial time-step $t(0)$. The intermediate resistance diagonal matrix comprises intermediate line resistance values for each line, present as diagonal elements.

At step 306d, a subsequent reactance diagonal matrix, is estimated by fixing the intermediate resistance diagonal matrix, based on the voltage profile at next time-step using the on-line convex optimization technique. The next time-step is the subsequent time-step. For example, $t(1)$ is the next time-step to the previous time-step $t(0)$. Similarly, $t(2)$ is the next time-step to the previous time-step $t(1)$, and so on. The subsequent reactance diagonal matrix comprises subsequent line reactance values for each line, present as diagonal elements.

At step 306e, a subsequent resistance diagonal matrix is estimated by fixing the intermediate reactance diagonal matrix, based on the voltage profile at the next time-step using the on-line convex optimization technique. The subsequent resistance diagonal matrix comprises subsequent line resistance values for each line, present as diagonal elements.

In an embodiment, (i) estimating the reactance diagonal matrices (intermediate and subsequent) by fixing the respective resistance diagonal matrices (intermediate and subsequent), and (ii) estimating the resistance diagonal matrices (intermediate and subsequent) by fixing the respective reactive diagonal matrices (intermediate and subsequent), is achieved using the Gauss-Seidel technique.

At step 306f, the steps (d) through (e), are repeated by considering the subsequent reactance diagonal matrix as the intermediate reactance diagonal matrix and the subsequent resistance diagonal matrix as the intermediate resistance diagonal matrix, at each subsequent step using the Gauss-Seidel technique, until the plurality of time-steps (all the time-steps) is completed, to obtain a final reactance diagonal matrix and a final resistance diagonal matrix of the electrical distribution network. The final reactance diagonal matrix comprises final line reactance values for each line, present as diagonal elements, after the execution of algorithm 1. Similarly, the final resistance diagonal matrix comprises final line resistance values for each line, present as diagonal elements, after the execution of algorithm 1.

At step 306g, the line resistance of each line is determined from the final resistance diagonal matrix. Similarly, the line reactance of each line is determined from the final reactance diagonal matrix, to obtain the line-parameters of the electrical distribution network.

The on-line convex optimization technique employs a first objective function and a first constraint set while (i) estimating the intermediate reactance diagonal matrix, by fixing the initial resistance diagonal matrix at step 306b, and (ii) estimating the subsequent reactance diagonal matrix, by fixing the intermediate resistance diagonal matrix at step 306d. The first objective function is to minimize a difference between the intermediate reactance diagonal matrix and the initial reactance diagonal matrix obtained at two consecutive time-steps $t$ and $t+1$. The first objective function is mathematically expressed as below:

$$min \quad \left|\left|D(\widehat{x_t}) - D(\hat{x}_{t-1})\right|\right|_F^2$$

The first constraint set comprises three constraints. The first constraint is the intermediate reactance diagonal matrix obtained at a current time-step belongs to a predefined reactance convex compact set. The second constraint is an exogenous noise at each bus of the electrical distribution network should be bounded within a first predefined bound value. The third constraint is the voltage of the electrical distribution network obtained at the current time-step (at current iteration) should belong to a predefined voltage convex compact set. The first constraint, the second constraint and the third constraints are mathematically expressed as below (in the sequence):

$$\forall(v_i, \ v_{i+1}, \ u_i, \ q_i) \ \in \ \mathfrak{G}_t$$

$$-\beta 1 \preceq v_{i+1} - v_i - f(\theta, \widehat{r}_{t-1}, \widehat{x_t})u_i \preceq \beta 1$$

$$v_{i+1} - f(\theta, \widehat{r}_{t-1}, \widehat{x_t})q_i \ \in \ \mathcal{V}_{par}$$

Further, the on-line convex optimization technique employs a second objective function and a second constraint set while (i) estimating the intermediate resistance diagonal matrix, by fixing the initial reactance diagonal matrix at step 306c, and (ii) estimating the subsequent resistance diagonal matrix, by fixing the intermediate reactance diagonal matrix at step 306e. The second objective function is to minimize a difference between the intermediate resistance diagonal matrix and the initial resistance diagonal matrix obtained at two consecutive time-steps $t$ and $t+1$. The second objective function is mathematically expressed as below:

$$min \quad \left|\left|D(\widehat{r_t}) - D(\widehat{r}_{t-1})\right|\right|_F^2$$

The second constraint set also comprises 3 constraints. The first constraint is that the intermediate resistance diagonal matrix obtained at a current time-step belongs to a predefined resistance convex compact set. The second constraint is that an exogenous noise at each bus of the electrical distribution network should be bounded within a first predefined bound value. The third constraint is that the voltage of the electrical distribution network obtained at the current time-step should belongs to the predefined volage convex compact set. The first constraint, the second constraint and the third constraints are mathematically expressed as below (in the sequence):

$$\forall \ (v_i, \ v_{i+1}, \ u_i, \ q_i) \ \in \ \mathfrak{G}_t$$

$$-\beta 1 \preceq v_{i+1} - v_i - f(\theta, \widehat{r_t}, \hat{x}_{t-1})u_i \preceq \beta 1$$

$$v_{i+1} - f(\theta, \widehat{r_t}, \hat{x}_{t-1})q_i \ \in \ \mathcal{V}_{par}$$

At step 308 of the method 300, the one or more hardware processors 104 of the system 100 are configured to determine a stable control signal for each bus that stabilizes the voltage of the electrical distribution network, at each time-step, based on the line-parameters of the corresponding bus predicted at step 306 of the method 300. In an embodiment, a non-convex optimization technique is employed to determine the stable control signal for each bus that stabilizes the voltage of the electrical distribution network.

The stable control signal for each bus that stabilizes the voltage of the electrical distribution network, at each time-step, based on the line-parameters, is determined by minimizing a non-convex objective function of the non-convex optimization technique and a third constraints set. The non-convex objective function comprises a voltage violation cost, a control signal for each bus, and a slack variable. The non-convex objective function is mathematically expressed as below:

$$min \ \left|\left| \widetilde{v}' - v_{nom} \right|\right|^2_{P_v} + \left|\left| u(t) \right|\right|^2_{P_u} + \alpha\gamma^2$$

The third constraints set also comprises three constraints. The first constraint is that the reactive power injection at each bus at the corresponding time-step should be bounded by a second predefined bound value and a third predefined bound value. The second constraint is that the predicted voltage of the electrical distribution network based on the line-parameters should be equal to the voltage of the electrical distribution network without an external voltage disturbance. The third constraint is that the predicted voltage of the electrical distribution network should be bounded within a first predefined voltage bound value and a second predefined voltage bound value. The first constraint, the second constraint and the third constraints are mathematically expressed as below (in the sequence):

$$s.t \quad q_{min} \ \leq \ q(t-1) + u(t) \ \leq \ q_{max}$$

$$\widetilde{v}' \ = \ v(t) \ + \ f(\theta, \widehat{r}_t, \widehat{x}_t)u(t)$$

$$v_{min} + (\mu - \gamma)1 \leq \widetilde{v}' \leq v_{max} - (\mu - \gamma)1$$

At step 310 of the method 300, the one or more hardware processors 104 of the system 100 are configured to evaluate a stable voltage and a reactive power injection for each bus, at each time-step, using the corresponding stable control signal determined at step 308 of the method 300.

At step 312 of the method 300, the one or more hardware processors 104 of the system 100 are configured to stabilize the voltage stabilizing of the electrical distribution network in real-time, by utilizing the stable voltage evaluated for each bus at each time-step at step 310 of the method 300.

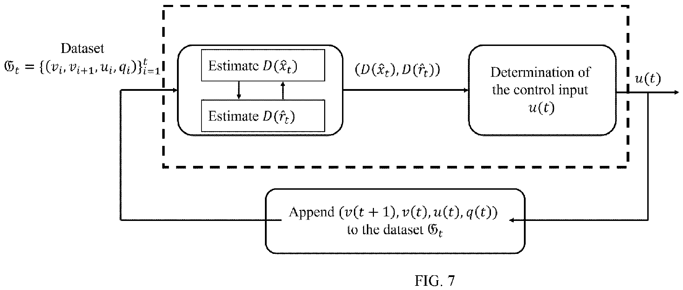

Thus, the proposed on-line robust voltage control algorithm (algorithm 1) of the present disclosure utilizes two parts which work in tandem. FIG. 7 illustrates an exemplary flow diagram of a robust online voltage control algorithm for predicting the line-parameters and the stable control signals of the electrical distribution network, in accordance with some embodiments of the present disclosure. As shown in FIG. 7, the first part (algorithm 2) operates based on a consistent model chasing algorithm called GCBC, and it predicts the line-parameters (the line resistance and the line reactance) of the electrical distribution network. Then in the second part, these predicted line-parameters are fed to the robust control algorithm called ROCAL and based on these predicted line-parameters, it determines the stable control signal u(t), which regulates the voltage of the electrical distribution network within the safe limits.

The model chasing algorithm GCBC (algorithm 2) is developed by combining results from the convex body chasing (the on-line convex optimization technique) and Gauss-seidel techniques, The objective of this GCBC is to iteratively predict the line resistance and line reactance of the given electrical distribution network considering sequentially nested convex sets. In GCBC (algorithm 2), these sequentially nested convex sets are the consistent sets of possible electrical distribution network (grid) data. Considering the convex body chasing technique, a simple projection-based approach is leveraged which is a more computationally efficient compared to the Steiner point-based method.

The robust control algorithm ROCAL typically considers the predicted values of the line-parameters obtained from the GCBC (Algorithm 2), and computes control updates to stabilize the voltage the electrical distribution network. In addition, it also provides a provable robustness guarantee, i.e., the finite mistake guarantees of algorithm 1.

The proposed on-line robust voltage control algorithm (Algorithm 1) is described below in the form of pseudocode steps.

Algorithm 1: On-line robust voltage control algorithm

1. Substation bus voltage (squared) $v_0 \in \mathbb{R}$

2. Desired nominal voltage $v_{nom} \in \mathbb{R}^n$

3. Bounds on the voltage and reactive power $[v_{min}, v_{max}], [q_{min}, q_{max}] \subset \mathbb{R}^n$

4. Initial bus voltage and reactive power $v(1), q(0) \in \mathbb{R}^n$

5. State and action cost matrices $P_v, P_u \in \mathbb{S}^n_+$

6. Compact convex uncertainty sets of the model parameter $\mathcal{R}, \mathcal{X} \subset \mathbb{S}^n_+ \cap \mathbb{R}^{n \times n}_+$

7. Upper bound of noise $\beta > 0$

8. Slack variable weight $\alpha > 0$

9. **Procedure** $GCBC$ $(D(\hat{x}), D(\hat{r})) \dashrightarrow$ Algorithm 2

10. Initialize an empty trajectory $\mathfrak{G}_0 = [.]$. Set $t = 1$

11. if $t = 1$

12. Initialize model parameter estimates $D(\hat{x}_1) \in \mathcal{X}, D(\hat{r}_1) \in \mathcal{R}$

13. else

14. Run Algorithm 2 and ask for new parameter estimates $\left(D(\hat{x}_t), D(\hat{r}_t)\right) \leftarrow$
$\Phi_{(v(t), u(t))}\left(D(\hat{x}_t), D(\hat{r}_t)\right)$

15. **Procedure** $ROCAL$ $(u(t))$

16. Solve the following optimization problem and obtain $u(t) \leftarrow$
$\Psi_{(D(\hat{x}_t), D(\hat{r}_t))}(v(t)$

$$min \; \left|\left|\tilde{v}' - v_{nom}\right|\right|^2_{P_v} + \left|\left|u(t)\right|\right|^2_{P_u} + \alpha\gamma^2$$

$$s.t \quad q_{min} \leq q(t-1) + u(t) \leq q_{max}$$

$$\tilde{v}' = v(t) + f(\theta, \hat{r}_t, \hat{x}_t)u(t)$$

$$\mu = \beta + \kappa(\tau)\left|\left|u(t)\right|\right|_2$$

$$v_{min} + (\mu - \gamma)1 \leq \tilde{v}' \leq v_{max} - (\mu - \gamma)1$$

17. Apply $u(t)$ and update $q(t)$ and $v(t+1)$ as

$$q(t) = q(t-1) + u(t)$$

$$v(t+1) = v(t) + f(\theta, \hat{r}_t, \hat{x}_t)\,u(t) + w(t)$$

18. Append $\left(v(t), v(t+1), u(t), q(t)\right)$ to the trajectory of $\mathfrak{G}_{t-1}$ and obtain $\mathfrak{G}_t$
$$\mathfrak{G}_t = [(v(i), v(i+1), u(i), q(i))]^t_{i=1}$$

19. Update $t \leftarrow t + 1$ and go to Step 14

Algorithm 2:

1. Input Data: $D(\hat{x}_{t-1}) \in \mathcal{X}, D(\hat{r}_{t-1}) \in \mathcal{R}$

2. Output Data: $D(\hat{x}_t), D(\hat{r}_t)$

3. Fix $D(\hat{r}_{t-1})$ and run:

$$min \quad \left\|D(\hat{x}_t) - D(\hat{x}_{t-1})\right\|_F^2$$

$$s.t \quad D(\hat{x}_t) \in \mathcal{X}$$

$$\forall (v_i, v_{i+1}, u_i, q_i) \in \mathfrak{G}_t$$

$$-\beta 1 \le v_{i+1} - v_i - f(\theta, \hat{r}_{t-1}, \hat{x}_t)u_i \le \beta 1$$

$$v_{i+1} - f(\theta, \hat{r}_{t-1}, \hat{x}_t)q_i \in \mathcal{V}_{par}$$

4. Fix $D(\hat{x}_{t-1})$ and run:

$$min \quad \left\|D(\hat{r}_t) - D(\hat{r}_{t-1})\right\|_F^2$$

$$s.t \quad D(\hat{r}_t) \in \mathcal{R}$$

$$\forall (v_i, v_{i+1}, u_i, q_i) \in \mathfrak{G}_t$$

$$-\beta 1 \le v_{i+1} - v_i - f(\theta, \hat{r}_t, \hat{x}_{t-1})u_i \le \beta 1$$

$$v_{i+1} - f(\theta, \hat{r}_t, \hat{x}_{t-1})q_i \in \mathcal{V}_{par}$$

The ROCAL includes a slack variable $\gamma$. If $\gamma = 0$, then the optimization problem at step 16 is feasible and keep the voltage of the electrical distribution network within the safe limits only when the current model estimates $D(\hat{x}_t)$ and $D(\hat{r}_t)$ are close enough to the true model. However, if the current model estimates $D(\hat{x}_t)$ and $D(\hat{r}_t)$ are far from the true model, then the optimization problem at step 16 is not feasible; that is there may not a control action that keeps the predicted voltage with the safe limits under an incorrect model.

At step 314 of the method 300, the one or more hardware processors 104 of the system 100 are configured to determine a finite error stability bound of the electrical distribution network, resulted from the stable voltage evaluated for the voltage stabilizing of the electrical distribution network. The proposed on-line robust voltage control algorithm guarantees that the voltage limits will be violated at most

$$\frac{2v}{\kappa(\mathrm{T})} diam(\mathcal{R})diam(\mathcal{X}) + 1 \qquad \text{-------------- (12)}$$

Wherein $v$ and $\kappa(\mathrm{T})$ are defined in below theorems 1 and 2

Theorem 1: Given two compact convex sets $\mathcal{R}$, $\mathcal{X} \subset \mathbb{S}^n$, the competitive ratio $v$ of algorithm 2 is at-most $v = (\psi(n^2 - 1)n^{n^2})^2$.

Theorem 2: Let $(D(\hat{x}_t), D(\hat{r}_t)) \in S_t$, where, for $t \ge 1$, $S_t$ is defined. Further,

$$\kappa(\mathrm{T}) := \left(BL_{\mathcal{A}} \, \kappa(\mathrm{T}_1) + \kappa(\mathrm{T}_2)\right) = \frac{(BL_{\mathcal{A}}\mathrm{T}_1 + \mathrm{T}_2)}{2\|q_{max} - q_{min}\|_2}$$

The proposed on-line robust voltage control algorithm and the method 300 of the present disclosure solves the voltage stability problem of the balanced electrical distribution network (grid) without knowing the exact value of the line-parameters. The present disclosure keeps the electrical distribution network voltages within the safe limits by chasing the consistent line-parameters, and certifies that the number of times, when the voltage violates the prescribed limits are bounded. Further, the present disclosure enables to perform a rigorous mathematical analysis determine the finite error bound of the network, which depends on the diameter of the parameter spaces, competitive ratio, and the robustness margin.

Example scenario:

A series of numerical experiments are performed to verify the effectiveness of the method 300 of the present disclosure. For these experiments, the standard IEEE 33 bus electrical distribution network as shown in FIG. 4. As described above, in the exemplary electrical distribution network four solar photo voltaic (PV) panels are introduced at bus 2,5,12, and 18 and the capacity of each solar PV panel is set as 4 MW. The solar generation data for Los Angeles is obtained for 15th July 2019. Likewise, the real-time load data and the true values of $D(r)$ and $D(x)$ of the network was obtained from the literature database.

Throughout these experiments, for convenience, it is considered that the controllers with the reactive power injection capacity are set up at every bus of the network and select q(0) = 0. The nominal voltage and the voltage safe limits of this network are $v_{nom}$ = (12.66 kV)$^2$ h and [$v_{min}$, $v_{max}$] = [0.95 pu; 1.05 pu] = (12.027 kV)$^2$; (13.293 kV)$^2$. The nonlinear power flow equations of the network are computed by employing PANDAPOWER and obtained $v(1)$. In this computation, the exogenous active power injection data at each bus was used at 15-minutes intervals over the 24-hour period. After introducing the 4 solar PV panels in the exemplary electrical distribution network it was found that the voltage profile violates the safe limits.

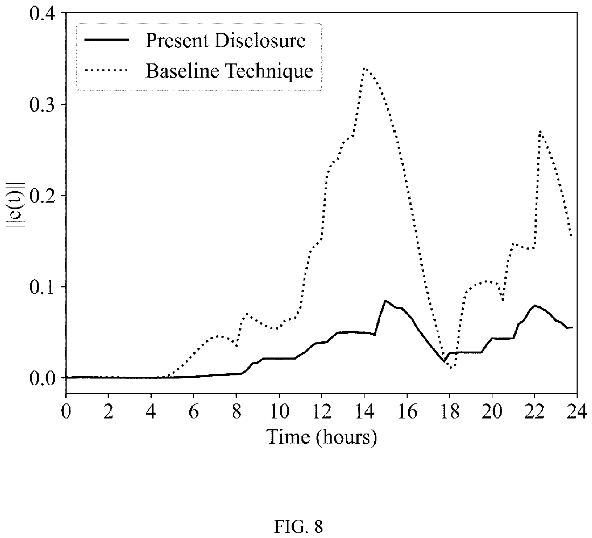

To bring the voltages of the exemplary electrical distribution network within the safe limits, the baseline control algorithm (baseline technique) in paper (C. Yeh, J. Yu, Y. Shi, and A. Wierman, "Robust online voltage control with an unknown grid topology," in Proceedings of the Thirteenth ACM International Conference on Future Energy Systems, 2022, pp. 240-250), and then implemented the nonlinear robust control algorithm ROCAL given in algorithm 1 of the present disclosure. In these experiments, the exact information of the network topology $M$ and the line-parameters $D(r)$ and $D(x)$. For both these algorithms (the baseline technique and the method 300 of the present disclosure), below are selected [$q_{min}$, $q_{max}$] = [-0.12 MVar, 0.12 MVar], $P_v$= 0:1I, $P_v$ = 10I, and set $\beta$ = 8:65, $\kappa$(T) = 0:0368, $\alpha$ = 100. In addition, below are fixed as $D$ ($\theta$) = 0:49I in equation 7. Both these optimization algorithms are implemented in PYOMO using the IPOPT solver. The voltage profiles after implementing these algorithms were obtained. It was observed that the baseline technique unable to steer the network voltages within the safe limits. The possible reason is that the baseline technique considers the linear power flow equations, and it requires a higher reactive power injection limit, i.e., typically ±0.24 MVar. In contrast, the present disclosure considers the nonlinear power flow equations, and it needs a small control effort (±0:12 MVar) to stabilize the network voltages. Further an error vector $e(t)$ := ($v(t)$ - $v_{nom}$1)and $\|e(t)\|$ was computed for both the baseline technique and the present disclosure. FIG. 8 is a graph showing a comparison of an error vector magnitude of a baseline technique and the present disclosure. As shown in FIG. 8, the present disclosure keeps $v(t)$ as close as possible to the $v_{nom}$.

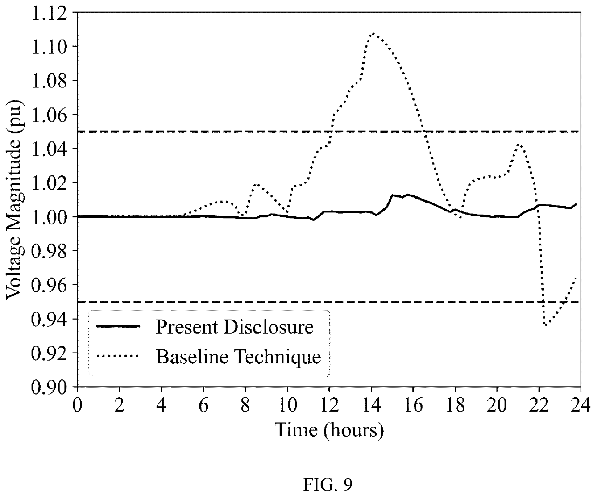

FIG. 9 is a graph showing a comparison of the voltage profile of bus 13 of the exemplary electrical distribution network of FIG. 4, associated to the baseline technique and the present disclosure. As shown in FIG. 9, the voltage profile of bus 13 is stable resultant of the present disclosure in comparison to the baseline technique.

Through the experimental results, the method 300 of the present disclosure outperforms over the baseline technique for the real-time voltage stabilization of the electrical distribution networks with the non-linear power flows. Numerical illustrations revealed that the present disclosure efficiently predicts the line-parameters and stabilizes the voltage profiles, with a significantly reduced reactive power injection compared to other existing real-time voltage control techniques.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of the real-time voltage stabilization of the electrical distribution networks with the non-linear power flows. The present disclosure proposes the online robust control algorithm, which operates without knowing the exact information of the line-parameters and resolves the voltage stability problem of the balanced electrical distribution network.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300), comprising the steps of:

    obtaining, via one or more hardware processors, a load data, a distributed energy resources (DER) data, and a network data of an electrical distribution network whose voltage is to be controlled in a real-time, wherein the load data and the DER data are obtained at each time-step of a plurality of time-steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time-step comprises a load active power consumption and a load reactive power consumption at the one or more buses of the plurality of buses, the DER data at each time-step comprises a DER active power generation and a DER reactive power generation, and the network data comprises of a line resistance and a line reactance of each line of the plurality of lines(302);
    simulating, via the one or more hardware processors, the electrical distribution network based on the load data, the DER data, and the network data using a non-linear power flow model, to obtain a voltage profile at each time-step of the electrical distribution network, wherein the voltage profile at each time-step comprises a voltage magnitude data at the plurality of buses (304);
    predicting, via the one or more hardware processors, line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines (306);
    determining, via the one or more hardware processors, a stable control signal for each bus of the plurality of buses, that stabilizes a voltage of the electrical distribution network, at each time-step, based on the line-parameters, using a non-convex optimization technique (308);

evaluating, via the one or more hardware processors, a stable voltage and a reactive power injection for each bus, at each time-step, using the stable control signal associated to each bus (310); and

stabilizing, via the one or more hardware processors, a voltage stabilizing of the electrical distribution network in real-time by utilizing the stable voltage evaluated for each bus at each time-step (312).

2. The processor-implemented method as claimed in claim 1, further comprising: determining, via the one or more hardware processors, a finite error stability bound of the electrical distribution network, resulted from the stable voltage evaluated for the voltage stabilizing of the electrical distribution network (314).

3. The processor-implemented method as claimed in claim 1, wherein simulating the electrical distribution network based on the load data, the DER data, and the network data, using the non-linear power flow model, to obtain the voltage profile at each time-step of the electrical distribution network, comprising:

representing the electrical distribution network as a tree graph based on the plurality of buses and the plurality of lines, in a parent-child relationship using a simulation model (304a);

defining a set of non-linear power flow equations for each bus of the plurality of buses using the non-linear power flow model, wherein the set of non-linear power flow equations for each bus comprises (i) an active power injection at the corresponding bus, (ii) the reactive power injection at the corresponding bus, (iii) a voltage difference between the corresponding bus and each of one or more neighboring bus, and (iv) an overall voltage of the electrical distribution network (304b); and

calculating the voltage magnitude data at each bus of the plurality of buses, using the set of non-linear power flow equations, to obtain the voltage profile of the electrical distribution network at each time-step (304c).

4. The processor-implemented method as claimed in claim 1, wherein predicting the line-parameters of the electrical distribution network, based on the voltage profile using the on-line convex optimization technique and the Gauss-Seidel technique, comprising:

(a) obtaining an initial reactance diagonal matrix and an initial resistance diagonal matrix of the electrical distribution network, randomly, based reactance values at each line, and resistance values at each line respectively (306a);

(b) estimating an intermediate reactance diagonal matrix, by fixing the initial resistance diagonal matrix, based on the voltage profile at a first time-step using the on-line convex optimization technique (306b);

(c) estimating an intermediate resistance diagonal matrix, by fixing the initial reactance diagonal matrix, based on the voltage profile at the first time-step using the on-line convex optimization technique (306c);

(d) estimating a subsequent reactance diagonal matrix, by fixing the intermediate resistance diagonal matrix, based on the voltage profile at next time-step using the on-line convex optimization technique (306d);

(e) estimating a subsequent resistance diagonal matrix, by fixing the intermediate reactance diagonal matrix, based on the voltage profile at the next time-step using the on-line convex optimization technique (306e);

(f) repeating steps (d) through (e), by considering the subsequent reactance diagonal matrix as the intermediate reactance diagonal matrix and the subsequent resistance diagonal matrix as the intermediate resistance diagonal matrix, at each subsequent step using the Gauss-Seidel technique, until the plurality of time-steps is completed, to obtain a final reactance diagonal matrix and a final resistance diagonal matrix of the electrical distribution network (306f); and

(g) determining (i) a line resistance of each line, using the final resistance diagonal matrix, and (ii) a line reactance of each line, using the final reactance diagonal matrix, to predict the line-parameters of the electrical distribution network (306g).

5. The processor-implemented method as claimed in claim 4, wherein the on-line convex optimization technique employs a first objective function and a first constraint set while (i) estimating the intermediate reactance diagonal matrix, by fixing the initial resistance diagonal matrix and (ii) estimating the subsequent reactance diagonal matrix, by fixing the intermediate resistance diagonal matrix, wherein the first objective function is to minimize a difference between the intermediate reactance diagonal matrix and the initial reactance diagonal matrix obtained at two consecutive time-steps of the plurality of time-steps, and wherein the first constraint set comprises: (i) the intermediate reactance diagonal matrix obtained at a current time-step belongs to a predefined reactance convex compact set, (ii) an exogenous noise at each bus of the electrical distribution network should be bounded within a first predefined bound value, and (iii) a voltage of the electrical distribution network obtained at the current time-step should belongs to a predefined voltage convex compact set.

6. The processor-implemented method as claimed in claim 4, wherein the on-line convex optimization technique employs a second objective function and a second constraint set while (i) estimating the intermediate resistance diagonal matrix, by fixing the initial reactance diagonal matrix and (ii) estimating the subsequent resistance diagonal matrix, by fixing the intermediate reactance diagonal matrix, wherein the second objective function is to minimize a difference between the intermediate resistance diagonal matrix and the initial resistance diagonal matrix obtained at two consecutive time-steps of the plurality of time-steps, and wherein the second constraint set comprises: (i) the intermediate resistance diagonal matrix obtained at a current time-step belongs to a predefined resistance convex compact set, (ii) an exogenous noise at each bus of the electrical distribution network should be bounded within a first predefined bound value, and (iii) a voltage of the electrical distribution network obtained at the current time-step should belongs to a predefined volage convex compact set.

7. The processor-implemented method as claimed in claim 1, wherein the stable control signal for each bus that stabilizes the voltage of the electrical distribution network, at each time-step, based on the line-parameters, is determined by minimizing a non-convex objective function of the non-convex optimization technique and a third constraints set, wherein the non-convex objective function comprises a voltage violation cost, a control signal for each bus, and a slack variable, and wherein the third constraints set comprises: (i) the reactive power injection at each bus at the corresponding time-step should be bounded by a second predefined bound value and a third predefined bound value, (ii) a predicted voltage of the electrical distribution network based on the line-parameters should be equal to the voltage of the electrical distribution network without an external voltage disturbance, and (iii) the predicted voltage of the electrical distribution network should be bounded within a first predefined voltage bound value and a second predefined voltage bound value.

8. A system (100) comprising:

a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:

obtain a load data, a distributed energy resources (DER) data, and a network data of an electrical distribution network whose voltage is to be controlled in a real-time, wherein the load data and the DER data are obtained at each time-step of a plurality of time-steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time-step comprises a load active power consumption and a load reactive power consumption at the one or more buses of the plurality of buses, the DER data at each time-step comprises a DER active power generation and a DER reactive power generation, and the network data comprises of a line resistance and a line reactance of each line of the plurality of lines;
simulate the electrical distribution network based on the load data, the DER data, and the network data using a non-linear power flow model, to obtain a voltage profile at each time-step of the electrical distribution network, wherein the voltage profile at each time-step comprises a voltage magnitude data at the plurality of buses;
predict line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines;
determine a stable control signal for each bus of the plurality of buses, that stabilizes a voltage of the electrical distribution network, for each time-step, based on the line-parameters, using a non-convex optimization technique;
evaluate a stable voltage and a reactive power injection for each bus, at each time-step, using the stable control signal associated to each bus; and
stabilize a voltage stabilizing of the electrical distribution network in real-time, by utilizing the stable voltage evaluated for each bus at each time-step.

9. The system as claimed in claim 8, wherein the one or more hardware processors (104) are further configured to determine a finite error stability bound of the electrical distribution network, resulted from the stable voltage evaluated for the voltage stabilizing of the electrical distribution network.

10. The system as claimed in claim 8, wherein the one or more hardware processors (104) are configured to simulate the electrical distribution network based on the load data, the DER data, and the network data, using the non-linear power flow model, to obtain the voltage profile at each time-step of the electrical distribution network, by:

representing the electrical distribution network as a tree graph based on the plurality of buses and the plurality of lines, in a parent-child relationship using a simulation model;
defining a set of non-linear power flow equations for each bus of the plurality of buses using the non-linear power flow model, wherein the set of non-linear power flow equations for each bus comprises (i) an active power injection at the corresponding bus, (ii) the reactive power injection at the corresponding bus, (iii) a voltage difference between the corresponding bus and each of one or more neighboring bus, and (iv) an overall voltage of the electrical distribution network; and
calculating the voltage magnitude data at each bus of the plurality of buses, using the set of non-linear power flow equations, to obtain the voltage profile of the electrical distribution network at each time-step.

11. The system as claimed in claim 8, wherein the one or more hardware processors (104) are configured to predict the line-parameters of the electrical distribution network, based on the voltage profile using the on-line convex optimization technique and the Gauss-Seidel technique, by:

(a) obtaining an initial reactance diagonal matrix and an initial resistance diagonal matrix of the electrical distribution network, randomly, based reactance values at each line, and resistance values at each line respectively;
(b) estimating an intermediate reactance diagonal matrix, by fixing the initial resistance diagonal matrix, based on the voltage profile at a first time-step using the on-line convex optimization technique;
(c) estimating an intermediate resistance diagonal matrix, by fixing the initial reactance diagonal matrix, based on the voltage profile at the first time-step using the on-line convex optimization technique;
(d) estimating a subsequent reactance diagonal matrix, by fixing the intermediate resistance diagonal matrix, based on the voltage profile at next time-step using the on-line convex optimization technique;
(e) estimating a subsequent resistance diagonal matrix, by fixing the intermediate reactance diagonal matrix, based on the voltage profile at the next time-step using the on-line convex optimization technique;
(f) repeating steps (d) through (e), by considering the subsequent reactance diagonal matrix as the intermediate reactance diagonal matrix and the subsequent resistance diagonal matrix as the intermediate resistance diagonal matrix, at each subsequent step using the Gauss-Seidel technique, until the plurality of time-steps is completed, to obtain a final reactance diagonal matrix and a final resistance diagonal matrix of the electrical distribution network; and
(g) determining (i) a line resistance of each line, using the final resistance diagonal matrix, and (ii) a line reactance of each line, using the final reactance diagonal matrix, to predict the line-parameters of the electrical distribution network.

12. The system as claimed in claim 11, wherein the on-line convex optimization technique employs a first objective function and a first constraint set while (i) estimating the intermediate reactance diagonal matrix, by fixing the initial resistance diagonal matrix and (ii) estimating the subsequent reactance diagonal matrix, by fixing the intermediate resistance diagonal matrix, wherein the first objective function is to minimize a difference between the intermediate reactance diagonal matrix and the initial reactance diagonal matrix obtained at two consecutive time-steps of the plurality of time-steps, and wherein the first constraint set comprises: (i) the intermediate reactance diagonal matrix obtained at a current time-step belongs to a predefined reactance convex compact set, (ii) an exogenous noise at each bus of the electrical distribution network should be bounded within a first predefined bound value, and (iii) a voltage of the electrical distribution network obtained at the current time-step should belongs to a predefined voltage convex compact set.

13. The system as claimed in claim 11, wherein the on-line convex optimization technique employs a second objective function and a second constraint set while (i) estimating the intermediate resistance diagonal matrix, by fixing the initial reactance diagonal matrix and (ii) estimating the subsequent resistance diagonal matrix, by fixing the intermediate reactance diagonal matrix, wherein the second objective function is to minimize a difference between the intermediate resistance diagonal matrix and the initial resistance diagonal matrix obtained at two consecutive time-steps of the plurality of time-steps, and wherein the second constraint set comprises: (i) the intermediate resistance diagonal matrix obtained at a current time-step belongs to a predefined resistance convex compact set, (ii) an exogenous noise at each bus of the electrical distribution network should be bounded within a first predefined bound value, and (iii) a voltage of the electrical distribution network obtained at the current time-step should belongs to a predefined volage convex compact set.

14. The system as claimed in claim 8, wherein the one or more hardware processors (104) are configured to determine the stable control signal for each bus that stabilizes the voltage of the electrical distribution network, at each time-step, based on the line-parameters, by minimizing a non-convex objective function of the non-convex optimization technique and a third constraints set, wherein the non-convex objective function comprises a voltage violation cost, a control signal for each bus, and a slack variable, and wherein the third constraints set comprises: (i) the reactive power injection at each bus at the corresponding time-step should be bounded by a second predefined bound value and a third predefined bound value, (ii) a predicted voltage of the electrical distribution network based on the line-parameters should be equal to the voltage of the electrical distribution network without an external voltage disturbance, and (iii) the predicted voltage of the electrical distribution network should be bounded within a first predefined voltage bound value and a second predefined voltage bound value.

15. One or more non-transitory machine-readable information storage mediums comprising one or more instructions which when executed by one or more hardware processors cause:

obtaining, a load data, a distributed energy resources (DER) data, and a network data of an electrical distribution network whose voltage is to be controlled in a real-time, wherein the load data and the DER data are obtained at each time-step of a plurality of time-steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time-step comprises a load active power consumption and a load reactive power consumption at the one or more buses of the plurality of buses, the DER data at each time-step comprises a DER active power generation and a DER reactive power generation, and the network data comprises of a line resistance and a line reactance of each line of the plurality of lines;
simulating the electrical distribution network based on the load data, the DER data, and the network data using a non-linear power flow model, to obtain a voltage profile at each time-step of the electrical distribution network, wherein the voltage profile at each time-step comprises a voltage magnitude data at the plurality of buses;
predicting line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines;
determining a stable control signal for each bus of the plurality of buses, that stabilizes a voltage of the electrical distribution network, at each time-step, based on the line-parameters, using a non-convex optimization technique;
evaluating a stable voltage and a reactive power injection for each bus, at each time-step, using the stable control signal associated to each bus;
stabilizing a voltage stabilizing of the electrical distribution network in real-time by utilizing the stable voltage evaluated for each bus at each time-step; and
determining a finite error stability bound of the electrical distribution network, resulted from the stable voltage evaluated for the voltage stabilizing of the electrical distribution network.

System **100**

**108**

Memory **102**

Modules **102a**

Repository
**102b**

I/O interface(s)
**106**

Hardware
processor(s)
**104**

FIG. 1

| 202<br>Network Simulator | Voltage<br>data → | 204<br>Line parameter<br>predictor | Predicted<br>line-parameter<br>values → | 206<br>Robust controller |

Stable voltage<br>dataset

208<br>On-line computation unit

Generated control<br>signals

FIG. 2

300

Obtaining a load data, a distributed energy resources (DER) data, and a network data of an electrical distribution network whose voltage is to be controlled in a real-time, wherein the load data and the DER data are obtained at each time step of a plurality of time steps for a predefined time period, and wherein the electrical distribution network is associated with a plurality of consumers and comprises (i) a plurality of buses and a plurality of lines connected to the plurality of buses, (ii) one or more distributed energy resources present at one or more buses of the plurality of buses, and (iii) one or more network loads present at one or more buses of the plurality of buses, and wherein the load data at each time step comprises a load active power consumption and a load reactive power consumption at the one or more buses of the plurality of buses, the DER data at each time step comprises a DER active power generation and a DER reactive power generation, and the network data comprises of a line resistance and a line reactance of each line of the plurality of lines

302

Simulating the electrical distribution network based on the load data, the DER data, and the network data using a non-linear power flow model, to obtain a voltage profile at each time step of the electrical distribution network, wherein the voltage profile at each time step comprises a voltage magnitude data at the plurality of buses

304

Predicting line-parameters of the electrical distribution network, based on the voltage profile using an on-line convex optimization technique and a Gauss-Seidel technique, wherein the line-parameters of the electrical distribution network comprises a line resistance of each line of the plurality of lines and a line reactance of each line of the plurality of lines

306

A

FIG. 3A

300

A

Determining a stable control signal for each bus of the plurality of buses, that stabilizes a voltage of the electrical distribution network, at each time-step, based on the line-parameters, using a non-convex optimization technique

308

Evaluating a stable voltage and a reactive power injection for each bus, at each time-step, using the stable control signal associated to each bus

310

Stabilizing a voltage stabilizing of the electrical distribution network in real-time by utilizing the stable voltage evaluated for each bus at each time-step

312

Determining a finite error stability bound of the electrical distribution network, resulted from the stable voltage evaluated for the voltage stabilizing of the electrical distribution network

314

FIG. 3B

FIG. 4

Representing the electrical distribution network as a tree graph based on the plurality of buses and the plurality of lines, in a parent-child relationship using a simulation model — 304a

Defining a set of non-linear power flow equations for each bus of the plurality of buses using the non-linear power flow model, wherein the set of non-linear power flow equations for each bus comprises (i) an active power injection at the corresponding bus, (ii) a reactive power injection at the corresponding bus, (iii) a voltage difference between the corresponding bus and each of one or more neighboring bus, and (iv) an overall voltage of the electrical distribution network — 304b

Calculating the voltage magnitude data at each bus of the plurality of buses, using the set of non-linear power flow equations, to obtain the voltage profile of the electrical distribution network at each time step — 304c

FIG. 5

| (a) Obtaining an initial reactance diagonal matrix and an initial resistance diagonal matrix of the electrical distribution network, randomly, based reactance values at each line, and resistance values at each line respectively | 306a |

| (b) Estimating an intermediate reactance diagonal matrix, by fixing the initial resistance diagonal matrix, based on the voltage profile at a first time-step using the on-line convex optimization technique | 306b |

| (c) Estimating an intermediate resistance diagonal matrix, by fixing the initial reactance diagonal matrix, based on the voltage profile at the first time-step using the on-line convex optimization technique | 306c |

| (d) Estimating a subsequent reactance diagonal matrix, by fixing the intermediate resistance diagonal matrix, based on the voltage profile at next time-step using the on-line convex optimization technique | 306d |

| (e) Estimating a subsequent resistance diagonal matrix, by fixing the intermediate reactance diagonal matrix, based on the voltage profile at the next time-step using the on-line convex optimization technique | 306e |

| (f) Repeating steps (d) through (e), by considering the subsequent reactance diagonal matrix as the intermediate reactance diagonal matrix and the subsequent resistance diagonal matrix as the intermediate resistance diagonal matrix, at each subsequent step using the Gauss-Seidel technique, until the plurality of time steps is completed, to obtain a final reactance diagonal matrix and a final resistance diagonal matrix of the electrical distribution network | 306f |

| (g) Determining (i) a line resistance of each line, using the final resistance diagonal matrix, and (ii) a line reactance of each line, using the final reactance diagonal matrix, to predict the line-parameters of the electrical distribution network | 306g |

FIG. 6

Dataset
$\mathfrak{G}_t = \{(v_i, v_{i+1}, u_i, q_i)\}_{i=1}^t$

Estimate $D(\hat{x}_t)$

Estimate $D(\hat{r}_t)$

$(D(\hat{x}_t), D(\hat{r}_t))$

Determination of
the control input
$u(t)$

$u(t)$

Append $(v(t+1), v(t), u(t), q(t))$
to the dataset $\mathfrak{G}_t$

FIG. 7

30

FIG. 8

FIG. 9

Europäisches
Patentamt

European
Patent Office

Office européen
des brevets

# EUROPEAN SEARCH REPORT

**Application Number**

EP 24 18 5089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHRISTOPHER YEH ET AL: "Online learning for robust voltage control under uncertain grid topology", ARXIV.ORG, CORNELL UNIVERSITY LIBRARY, 201 OLIN LIBRARY CORNELL UNIVERSITY ITHACA, NY 14853, 29 June 2023 (2023-06-29), XP091550806, * paragraph [00II]; figure 1 * * paragraph [0V.A] - paragraph [00VI]; figures 3-5 * * paragraph [III.A] - paragraph [III.C]; figure 2 * | 1-15 | INV. H02J3/16 H02J3/18 H02J3/38 H02J3/00 H02J13/00 |
| Y | US 2015/088439 A1 (COFFRIN CARLETON [AU] ET AL) 26 March 2015 (2015-03-26) * paragraphs [0285], [0298]; figure 1 * | 1-15 | |
| A | US 2020/408817 A1 (AL-KHABBAZ MUSTAFA MOHAMMED J [SA] ET AL) 31 December 2020 (2020-12-31) * figure 1 * | 1 | |
| A | US 2012/089264 A1 (PATEL SURESHCHANDRA B [CA]) 12 April 2012 (2012-04-12) * figure 1 * | 1 | **TECHNICAL FIELDS SEARCHED (IPC)** H02J |

The present search report has been drawn up for all claims

| Place of search | Date of completion of the search | Examiner |
|---|---|---|
| Munich | 2 December 2024 | Maucher, Bastian |

EPO FORM 1503 03.82 (P04C01)

## ANNEX TO THE EUROPEAN SEARCH REPORT
## ON EUROPEAN PATENT APPLICATION NO.

EP 24 18 5089

02-12-2024

| Patent document cited in search report | Publication date | Patent family member(s) | | Publication date |
|---|---|---|---|---|
| US 2015088439 A1 | 26-03-2015 | AU | 2013266021 A1 | 13-11-2014 |
| | | US | 2015088439 A1 | 26-03-2015 |
| | | WO | 2013173879 A1 | 28-11-2013 |
| US 2020408817 A1 | 31-12-2020 | US | 2020408817 A1 | 31-12-2020 |
| | | US | 2021396791 A1 | 23-12-2021 |
| | | US | 2021396792 A1 | 23-12-2021 |
| | | US | 2021396793 A1 | 23-12-2021 |
| US 2012089264 A1 | 12-04-2012 | AU | 2007291862 A1 | 06-03-2008 |
| | | US | 2012089264 A1 | 12-04-2012 |
| | | WO | 2008025162 A1 | 06-03-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321054900

**Non-patent literature cited in the description**

- **C. YEH** ; **J. YU** ; **Y. SHI** ; **A. WIERMAN**. Robust online voltage control with an unknown grid topology. *Proceedings of the Thirteenth ACM International Conference on Future Energy Systems*, 2022, 240-250